## Europäisches Patentamt
## European Patent Office
## Office européen des brevets

(19)

(11) Veröffentlichungsnummer: **0 362 388**
**A1**

(12)

# EUROPÄISCHE PATENTANMELDUNG
## veröffentlicht nach Art. 158 Abs. 3
## EPÜ

(21) Anmeldenummer: 89900372.7

(22) Anmeldetag: 29.09.88

(86) Internationale Anmeldenummer:
PCT/SU88/00194

(87) Internationale Veröffentlichungsnummer:
WO 89/05704 (29.06.89 89/14)

(51) Int. Cl.5: **B23F 19/00 , B24B 53/06**

(30) Priorität: 24.12.87 SU 4342343
24.12.87 SU 4342344

(43) Veröffentlichungstag der Anmeldung:
11.04.90 Patentblatt 90/15

(84) Benannte Vertragsstaaten:
**CH DE FR GB IT LI SE**

(71) Anmelder: **SARATOVSKOE SPETSIALNOE KONSTRUKTORSKOE BJURO ZUBOOBRABATYVAJUSCHIKH STANKOV SARATOVSKOGO STANKOSTROITELNOGO PROIZVODSTVENNOGO OBIEDINENIA ul. Ogorodnaya, 162**
**Saratov 410036(SU)**

(72) Erfinder: **ABYSOV, Nikolai Anatolievich**
**ul. Millerovskaya, 18-71**
**Saratov, 410036(SU)**
Erfinder: **BEZGODOV, Valery Alexandrovich**
**ul. Rabochaya, 53-7**
**Saratov, 410600(SU)**
Erfinder: **BELGORODSKY, Vladimir Semenovich**
**ul. 7 Nagornaya, 12-73**
**Saratov, 410001(SU)**
Erfinder: **PLOTNIKOV, Nikolai Dmitrievich**
**ul. Antonova-Saratovskogo, 18/40-263**
**Saratov, 410030(SU)**

(74) Vertreter: **Nix, Frank Arnold, Dr.**
**Kröckelbergstrasse 15**
**D-6200 Wiesbaden(DE)**

(54) **VERFAHREN ZUR HERSTELLUNG EINES VERZAHNTEN SCHLEIFWERKZEUGES UND VERFAHREN ZUR FERTIGBEARBEITUNG MIT DIESEM.**

(57) Verfahren zur Herstellung eines mit dem bearbeitenden Zahnrad (2) zusammenpassenden verzahnten Schleifwerkzeuges aus einer flachen Schleifscheibe (1), das im axialen Vorschub der flachen Schleifscheibe (1) und im Vorhandensein eines freien Schleifmittels in der Berührungszone besteht, und Verfahren zur Fertigbearbeitung des Zahnrades (2) mit diesem Werkzeug, das im Austausch des freien Schleifmittels gegen ein Schmier- und Kühlmittel und des axialen Vorschubs der Schleifscheibe (1) in

der Endphase der Herstellung des Werkzeuges gegen einen tangentialen Vorschub des Zahnrades (2) besteht.

FIG.1

# VERFAHREN ZUR HERSTELLUNG EINES VERZAHNTEN SCHLEIFWERKZEUGES UND VERFAHREN ZUR FERTIGBEARBEITUNG MIT DIESEM

## Technisches Gebiet

Die Erfindung bezieht sich auf das Gebiet des Maschinenbaus und zwar auf die Herstellung von Zahnrädern und betrifft insbesondere Verfahren zur Herstellung eines verzahnten Schleifwerkzeuges und Verfahren zur Fertigbearbeitung mit diesem. Sie eignet sich beispielsweise für die Herstellung eines Werkzeuges und zur Fertigbearbeitung von Kegel- und Hypoidpaaren mit Gerad- oder Kreisbogenzähnen.

## Zugrundeliegender Stand der Technik

Die zur Zeit bekannten Verfahren zur Herstellung eines verzahnten Schleifwerkzeuges (Technologie der mechanischen Bearbeitung und des Zusammenbaus im Präzisionsmaschinenbau, 1976, Verlag "Mashinostroenie", (Moskau), S. 210 bis 214) bestehen im wesentlichen im Heiss- oder Kaltpressen der Schleifmittelmasse mit einem Bindemittel in eine Metall- oder Kunststoffpressform, welche die Gegenform des Werkzeuges ist. Doch der Bedarf an speziellen komplizierten Gesenken, besonders für Schleifwerkzeuge in Form eines Kegelrades mit Kreisbogenzähnen, erhöht wesentlich die Arbeitsintensität und die Kosten bei deren Herstellung und verhindert somit die breite Einführung der Fertigbearbeitung von Kegelrädern mit einem solchen Werkzeug in die Industrie. Darüber hinaus erfordert ein so geformtes Schleifwerkzeug die Nachbearbeitung der Zähne mit einem Diamantwerkzeug mit dem Ziel, die Zusammenpassung der Werkzeugzähne und der Werkstückzähne zu verbessern, die Genauigkeit zu erhöhen und die Schneidkörner freizulegen.

Es ist ein weiteres Verfahren zur Herstellung eines verzahnten Schleifwerkzeuges (SU, A, 356112) bekannt. Nach diesem Verfahren wird ein diamantenes Schabewerkzeug in Form eines Zahnrades mit einem anderen analogen, eine bedeutend grössere Zähnezahl aufweisenden Schaber bearbeitet, indem beide Werkzeuge im Eingriff gegenseitig gewälzt und zwangsweise mit vorgegebener Übersetzung gedreht werden. Dabei wird in die Berührungszone ihrer Zähne ein freies Schleifmittel gegeben. Dieses Verfahren wird im wesentlichen zum Abrichten von schon hergestellten Zahnwerkzeugen benutzt und eignet sich nicht zum Formen des verzahnten Schleifwerkzeuges aus einem einstückigen Halbzeug. Ausserdem werden an das Abricht – und das abzurichtende Werkzeug harte Forderungen in bezug auf die Eigenschaften und die Menge an Schleifmittel gestellt, was die Anwendung dieses Verfahrens einschränkt.

Dem zum Patent angemeldeten Verfahren kommt ein Verfahren zur Herstellung eines abschleifenden Formwerkzeuges am nächsten (DE, A1, 3314453). In diesem Verfahren wird als bearbeitendes Werkzeug ein Formwerkzeug verwendet, das eine Form hat, die gegenüber der Form des zu bearbeitenden Schleifwerkstücks die Gegenform darstellt. Das bearbeitende Werkzeug wird gegenüber dem zu profilierenden Werkstück mit einem gewissen Spalt angeordnet, in den das freie Schleifmittel gegeben wird. Dabei setzt das profilierende Werkzeug das zu profilierende Werkstück über die im Spalt zwischen ihnen befindlichen Schleifmittelkörner in Drehung. Eine solche Kinematik der gegenseitigen Drehung verursacht den unvermeidlichen Schlupf des zu profilierenden Schleifwerkstücks bezüglich des profilierenden Werkzeuges. Aus diesem Grunde eignet sich das Verfahren zum Formen der Arbeitsflächen, deren Erzeugende zur Erzeugenden des Werkstücks parallel verläuft oder zu ihr in einem kleinen Winkel angeordnet ist, wie dies beim Abrichten der Schneckenschleifscheiben zum Schleifen von Stirnrädern der Fall ist (N.P.Sobolev u.a. Zahnbearbeitende Werkzeugmaschinen und Werkzeuge im Gerätebau, 1963, Verlag "Mashgiz", (Moskau-Leningrad), S. 239). Die Anfertigung eines Schleifwerkzeuges in Form eines Kegelrades mit Kreisbogenzähnen, beispielsweise eines Honkopfes, nach diesem Verfahren ist unmöglich, weil die Erzeugende des zu formenden Zahnes in einem grossen Winkel zur Erzeugenden der Fläche, auf der der Zahnkranz geformt wird, liegt. Deswegen werden unter Bedingungen, wenn die Körner des freien Schleifmittels sich wie Kugeln in einem Kugellager auf der Oberfläche des Schleifwerkstücks wälzen, die auf ihr zu formenden Zähne unvermeidlich angeschnitten werden.

In einem anderen Verfahren zur Fertigbearbeitung von Zahnrädern (SU, A, 199643) stellt man für jedes der zusammenpassenden Zahnräder eines Arbeitspaares sein eingenes Zahnwerkzeug her, dessen Schneidkanten man auf der Oberfläche anordnet, die sich aus der Bedingung der Zusammenpassung des zu bearbeitenden Rades und des bearbeitenden Rades ergibt, wobei man das letztere gegenüber dem zu bearbeitenden mit einer Hypoidverschiebung anbringt. In Anbetracht dessen, dass die Zusammenpassung der bearbeitenden und der zu bearbeitenden Zahnfläche nach angenäherten Methoden erreicht wird, kann man nach den bestehenden Verfahren zur Formgebung der Zähne, beispielsweise auf Metallbearbeitungsmaschinen, die Arbeitsfläche des Werkzeugzahnes erhalten, die sich an die vollständige Zusammenpassung mit der Zahnoberfläche des zu bearbeitenden Rades nur annähert. Deswegen besitzt ein solches Werkzeug die erforderlichen Genaugkeitscharakteristiken nicht, bei denen verschiedene Zahnradarten mit hoher Genauigkeit bearbeitet werden können. Ausserdem wird wegen getrennter Anfertigung des Zahnwerkzeuges und getrennter Bearbeitung jedes der zueinander passenden Zahnräder des Arbeitspaares mit diesem Werkzeug die Leistung sowohl der Werkzeuganfertigung, als auch der Fertigbearbeitung herabgesetzt.

Offenbarung der Erfindung

Der vorliegenden Erfindung liegt die Aufgabe zugrunde, ein solches Verfahren zur Herstellung eines verzahnten Schleifwerkzeuges und ein Verfahren zur Fertigbearbeitung mit diesem zu schaffen, das aufgrund des gegenseitigen Gleitens der bearbeitenden und der zu bearbeitenden Oberfläche die Bearbeitung aller Zahnradarten mit hoher Genauigkeit ermöglichen sollte.

Diese Ausgabe wird dadurch gelöst, dass man in einem Verfahren zur Herstellung eines verzahnten Schleifwerkzeuges, bestehend darin, dass man das bearbeitende Zahnrad mittels eines axialen Vorschubs mit dem Halbzeug des verzahnten Schleifwerkzeuges in Berührung bringt und sie dann unter gleichzeitiger Zuführung eines freien Schleifmittels in die Berührungszone zwangsweise dreht, erfindungsgemäss als Halbzeug für das verzahnte Schleifwerkzeug eine flache Schleifscheibe benutzt, in bezug auf welche man das bearbeitende Zahnrad derart anordnet, dass seine Achse und die Achse der flachen Schleifscheibe sich kreuzende Geraden darstellen, wobei die flache Schleifscheibe und das Zahnrad ein Hypoidpaar bilden.

Dies gestattet die Bearbeitung mit hoher Genauigkeit aller Zahnradarten unabhängig von der Zahnform und dem Material, aus dem sie hergestellt sind.

Man wählt zweckmässigerweise die Zähnezahl des zu formenden Zahnkranzes derart, dass das Zähnezahlverhältnis zwischen dem Zahnkranz des verzahnten Schleifwerkzeuges und dem bearbeitenden Zahnrad eine irrationale Zahl sein sollte.

Dadurch kann die Genauigkeit der Anfertigung des verzahnten Schleifwerkzeuges und die der Bearbeitung der Zahnräder mit diesem Werkzeug erheblich gesteigert werden.

Auf der anderen Seite der Diametralebene der Schleifscheibe kann man ein zusätzliches, mit dem ersten Zahnrad gepaartes Zahnrad anbringen, um auf der Scheibe einen zusätzlichen, in bezug auf den ersten Kranz konzentrischen Zahnkranz zu formen.

Dies erhöht wesentlich die Leistung des Herstellungsprozesses bei der Herstellung des verzahnten Schleifwerkzeuges.

Nach Abschluss der Formung mindestens eines Zahnkranzes auf der flachen Schleifscheibe ist es zweckmässig, die Zuführung des freien Schleifmittels in die Berührungszone des bearbeitenden Zahnrades und des verzahnten Schleifwerkzeuges einzustellen, dann mindestens einem Zahnrad einentangentialen Vorschub zu erteilen und gleichzeitig in die Berührungszone ein Kühl- und Schmiermittel bis zur vollständigen Beendigung der Fertigbearbeitung des Zahnrades zu geben.

Dies gibt die Möglichkeit, die Leistung des Fertigbearbeitungsprozesses von Zahnrädern durch Ausschliessen der für das Einrichten des Prozesses aufzuwendenden Zeit sowie durch die Möglichkeit der gleichzeitigen Bearbeitung der beiden Elemente des Zahnradgetriebes mit einem verzahnten Schleifwerkzeug erheblich zu erhöhen.

Kurze Beschreibung der Zeichnungen

Des weiteren wird die Erfindung durch konkrete Ausführungsbeispiele derselben und anhand der beigefügten Zeichnungen näher erläutert. In den Zeichnungen zeigt:

Fig. 1 in schematischer Darstellung die gegenseitige Anordnung der Schleifscheibe und des verzahnten Elementes, gemäss der Erfindung;

Fig. 2 die Anfangsstufe der Formung des Zahnkranzes;

Fig. 3 die Endstufe der Formung des Zahnkranzes;

Fig. 4 die gegenseitige Anordnung der Schleifscheibe und der paarigen Zahnräder;

Fig. 5 und 6 jeweils die Anfangs- und die Endstufe der Formung von zwei Zahnkränzen auf der Schleifscheibe;

Fig. 7 die gegnseitige Anordnung der Zähne des verzahnten Schleifwerkzeuges und des bearbeitenden Zahnrades bei der Formung des Zahnkranzes des Werkzeuges;

Fig. 8 die gegenseitige Anordnung der Zähne des verzahnten Schleifwerkzeuges und des zu bearbeitenden Zahnrades bei der Fertigbearbeitung.

Beste Ausführungsform der Erfindung

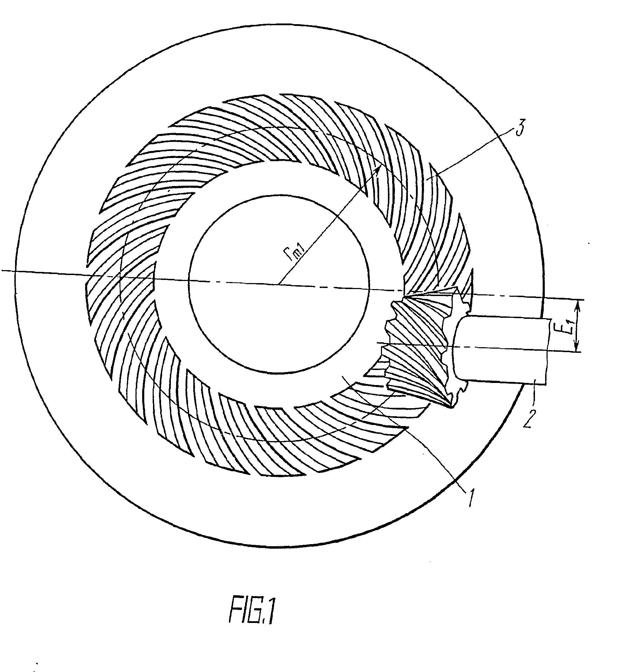

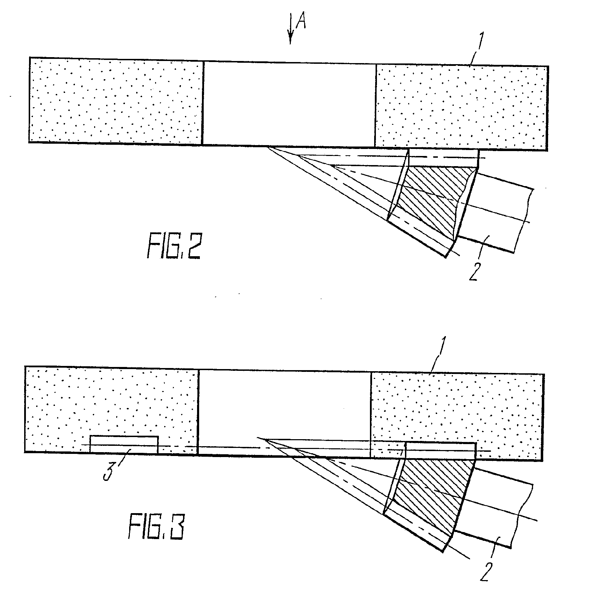

Das zum Patent angemeldete Verfahren zur Herstellung eines verzahnten Schleifwerkzeuges besteht im folgenden. Vor Beginn der Herstellung des verzahnten Schleiwerkzeuges aus einer flachen Schleifscheibe 1 (Fig. 1) mit dem bearbeitenden Rad 2 bestimmt man die geometrischen Abmessungen eines Zahnkranzes 3, der mit dem Zahnrad 2 zusammenpasst. Der Forderung der Zusammenpassung mit dem Zahnrad 2 entspricht das theoretische Erzeugungsplanrad am besten. Nach einer beliebigen weit bekannten Methode bestimmt man die Zähnzahl des Erzeugungsplanrades. Dann rundet man sie bis zu einem solchen nächsten ganzen Wert, bei dem das Zähnezahlverhältnis des Schleifzahnkranzes 3 zum bearbeitenden Zahnrad 2 sich beispielsweise durch eine irrationale Zahl ausdrücken lässt. Danach bestimmt man den durchschnittlichen Teilradius r und den hypoiden Abstand E des Schleif-Zahnkranzes 3 gegenüber dem bearbeitenden Zahnrad 2. In diese relativen Positionen stellt man die flache Schleifscheibe 1 (Fig. 2) und das bearbeitende Zahnrad 2 derart ein, dass die Zahnkrone des bearbeitenden Rades 2 die Stirnfläche der flachen Schleifscheibe 1 berühren sollen. Daraufhin erteilt man der Scheibe 1 und dem Rad 2 ein zwangläufiges synchrones Drehen entsprechend dem erhaltenen Verhältnis ihrer Zähne, gibt in die Berührungszone der Zähne des bearbeitenden Rades 2 und der Schleifscheibe 1 ein freies Schleifmittel und führt man den Arbeitsvorschub der Schleifscheibe 1 in Pfeilrichtung A aus.

Bei dem Gelangen der Körner des freien Schleifmittels zwischen die Zähne des Zahnrades 2 und die Schleifscheibe 1 entstehen Kontaktspannungen in der Zone ihrer Wechselwirkung. Im Unterschied zum Stahlzahnrad 2 mit gleichartiger Struktur besteht die Schleifscheibe 1 aus in ihren mechanischen Eigenschaften ungleichartigen Materialien. Ber der Bearbeitung der Schleifscheibe 1 mit dem mit ihr in Berührung stehenden Stahlzahnrad 2 unter Zuführung des freien Schleifmittels in die Berührungszone sind zwei Fälle möglich.

Die Körner der freien Schleifmittels gelangen zwischen die bearbeitende Oberfläche des Stahlzahnrades 2 und das Bindemittel der Schleifscheibe 1. Unter dem Druck des Zahnes des Zahnrades 2 dringen die harten

EP 0 362 388 A1

Körner des freien Schleifmittels in das Bindemittel ein und brechen aus ihm die Körner des Schleifmittels der Schleifscheibe 1 aus.

Die Körner des freien Schleifmittels gelangen zwischen die bearbeitende Oberfläche des Zahnes des Stahlzahnrades 2 und das Korn der Schleifscheibe 1. In diesem Fall dringt das sehr harte Korn des freien Schleifmittels in den weniger harten Zahn des Stahlzahnrades 2 etwas ein, wird von ihm mitgerissen und infolge des vorhandenen relativen Gleitens der bearbeitenden und der zu bearbeitenden Oberfläche auf das Bindemittel verschoben und dringt ferner in dieses unter Ausbrechen der Schleifkörner aus der Schleifscheibe 1 ein.

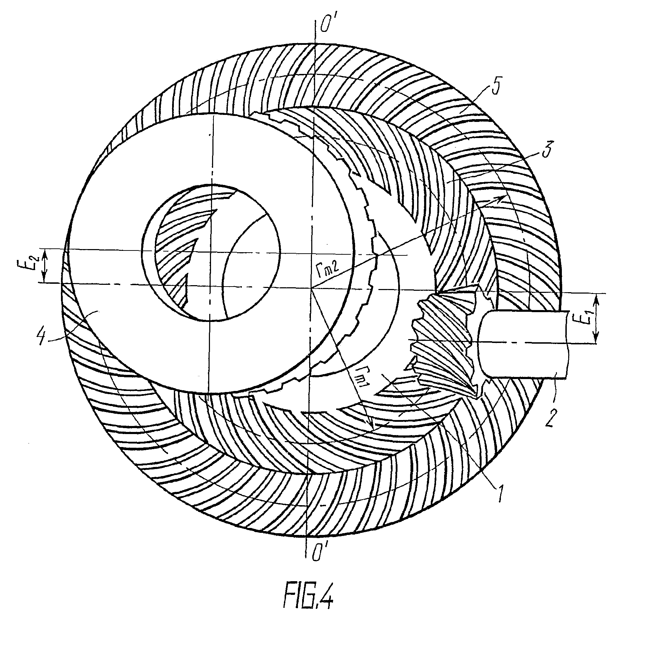

Mit dem fortschreitenden Ausbrechen der Körner der Schleifscheibe 1 (Fig. 3) dringen die Zähne des bearbeitenden Rades 2 immer tiefer in die Schleifscheibe 1 ein und bilden auf dieser den Zahnkranz 3, dessen Zähne ein Profil aufweisen, das mit dem Profil der Zähne des bearbeitenden Zahnrades 2 gegenseitig abwälzbar ist. So wird fortgefahren bis zur Formung der vollen Zahnhöhe des Zahnkranzes 3 auf der Schleifscheibe 1.

Die irrationale Zahl, mit der sich das Zähnezahlverhältnis des zu bearbeitenden Zahnkranzes 3 zum bearbeitenden Zahnrad 2 ausdrückt, gibt die Möglichkeit, als bearbeitendes Zahnrad 2 sogar ein Zahnrad mit ungenügenden Genauigkeitskennwerten, beispielsweise solchen wie Teilungsunterschied benachbarter Zähne zu benutzen. Bei einer irrationalen Übersetzung werden Fehler der benachbarten Teilungen der Zähne des bearbeitenden Zahnrades 2 auf dem zu formenden Zahnkranz 3 des Werkzeuges nicht nachgeformt, sondern über dieses umverteilt, so dass eine hohe Genauigkeit der benachbarten Teilungen der Zähne des Zahnkranzes 3 sichergestellt wird.

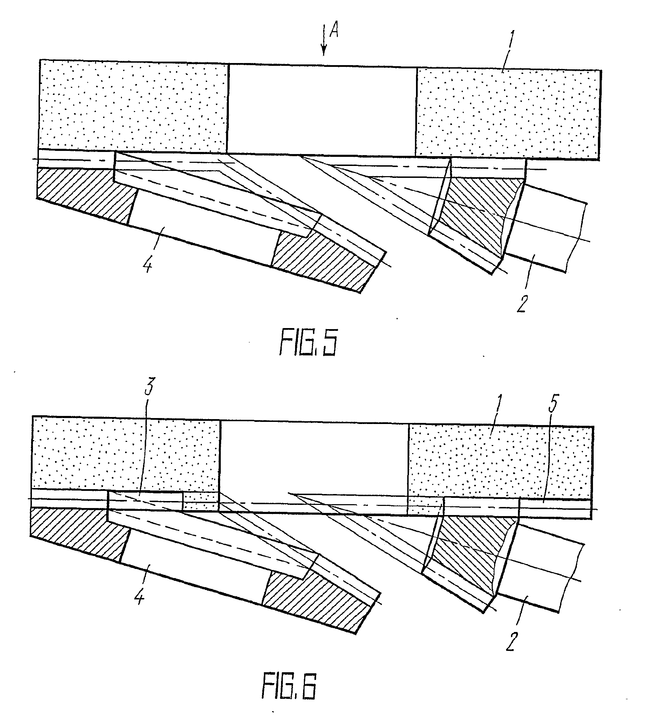

Auf der anderen Seite von der Diametralebene 0'-0' (Fig. 4) der flachen Schleifscheibe 1 stellt man in ihre relativen Positionen $r_{m2}$ und $E_2$ ein zusätzliches bearbeitendes Zahnrad 4, welches mit dem Zahnrad 2 paarig ist, ein und erteilt man den bearbeitenden Rädern 2 und 4 ein zwangsläufiges synchrones Drehen mit einem Geschwindigkeitsverhältnis, das dem Produkt aus den gefundenen Übersetzungen der Räder 2 und 4 und den zu formenden Kränzen der Schleifscheibe 1 gleich ist, führt man den Arbeitsvorschub nach Pfeilrichtung A (Fig. 5) aus und gibt in die Berührungszone der Zähne der bearbeitenden Räder 2 und 4 und der flachen Schleifscheibe 1 das freie Schleifmittel, wobei infolgedessen auf der Schleifscheibe 1 gleichzeitig zwei Zahnkränze 3 und 5 (Fig. 6) geformt werden, deren Zähne ein Profil aufweisen, das gegenseitig mit dem Profil der Zähne der bearbeitenden Räder 2 bzw. 4 abwälzbar ist. Der Bearbeitungsvorgang läuft wie im ersten Fall bei der Formung eines Zahnkranzes bis zur vollen Formung der Zahnhöhe der Zahnkränze 3 und 5 ab.

Die relativen Positionen $r_{m2}$ und $E_2$ (Fig. 4), in die man das zusätzliche Zahnrad 4 einstellt, und die geometrischen Abmessungen des zusätzlichen Zahnkranzes 5 auf der flachen Schleifscheibe 1 bestimmt man in gleicher Weise wie bei der Bestimmung der Abmessungen des Zahnkranzes 3. Die Möglichkeit für die Auswahl der geometrischen Abmessungen des Zahnkranzes 5, der mit dem Zahnrad 4 zusammenpasst, bietet die Möglichkeit, die beste Variante für die gegenseitige Anordnung zweier Zahnkränze 3 und 5 auf der flachen Schleifscheibe, beispielsweise die konzentrische, auszuwählen.

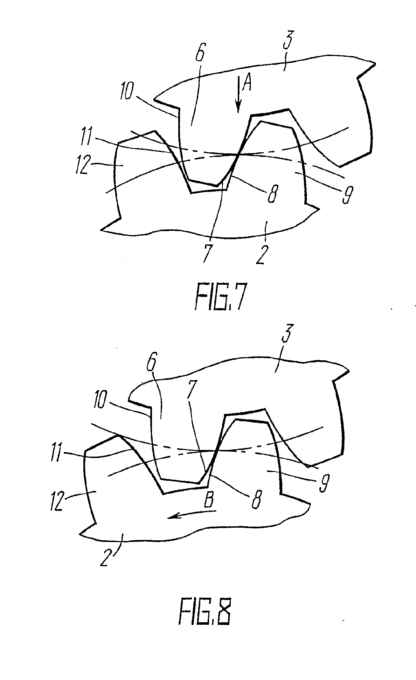

Das mit der vorgegebenen Übersetzung erfolgende synchrone Drehen der bearbeitenden Zahnräder 2 und 4, die ein Paar bilden, und die Anordnung der letzteren beiderseits der Diametralebene 0'-0' der Schleifscheibe 1 verhindert den Schlupf der freidrehenden Schleifscheibe 1 gegenüber den bearbeitenden Zahnrädern 2 und 4. Dadurch befinden sich die Zähne der bearbeitenden Zahnräder 2 und 4 im Zweiflankeneingriff mit den auf der Schleifscheibe 1 zu formenden Zähnen der Zahnkränze 3 und 5. Beim Zweiflankeneingriff berührt der Zahn 6 (Fig. 7) des Zahnkranzes 3 mit seiner Flanke 7 die Flanke 8 des Zahnes 9 des Zahnrades 2 und zugleich mit der Flanke 10 die Flanke 11 des Zahnes 12 des Zahnrades 2. Der Zweiflankeneingriff ermöglicht die Herstellung eines verzahnten Schleifwerkzeuges mit Zahnkränzen 3 und 5 (Fig. 6), die den theoretisch richtigen Eingriff mit den Zähnen der Zahnräder 2 bzw. 4 haben. Ein solcher Eingriff ist unerreichbar bei der Herstellung des verzahnten Schleifwerkzeuges nach den bestehenden Verfahren.

Nach Abschluss der Formung der vollen Zahnhöhe eines Zahnkranzes, beispielsweise des Kranzes 3 der Schleifscheibe 1, wird der axiale Vorschub und die Zuführung des freien Schleifmittels in die Berührungszone der Zähne des Kranzes 3 und der Zähne mindestens eines Zahnrades, beispielsweise des Rades 2, eingestellt. Dann wird dem Zahnrad 2 der tangentiale Vorschub erteilt, d.h. man erteilt der Drehgeschwindigkeit des Zahnrades 2 einen momentanen Zuwachs, beispielsweise in Pfeilrichtung B (Fig. 8), wonach man das Zahnrad 2 und die flache Schleifscheibe 1 mit dem Zahnkranz 3 zwangsweise synchron weiterdreht und in die Berührungszone ihrer Zähne ein Schmier- und Kühlmittel zuführt. Bei dem Bewirken des tangentialen Vorschubs in Pfeilrichtung B (Fig. 8) entsteht aufgrund der elastischen Verformungen der Flanken 7 und 8 der Zähne 6 bzw. 9 ein Spalt zwischen den Flanken 10 und 11 der Zähne 6 bzw. 12. Auf diese Weise wird der Zweiflankeneingriff des Zahnkranzes 3 mit dem Zahnrad 2 zum Einflankeneingriff. Die Körner der Schleifmittels, die gemeinsam mit dem Bindemittel den Körper des Zahnes 6 bilden, bewirken durch das relative Gleiten der Flanken 7 und 8 die Fertigbearbeitung der Flanke 8 des Zahnes 9 des Zahnrades 2. Das Schmier- und Kühlmittel wäscht aus der Eingriffszone der Flanken 7 und 8 der Zähne 6 bzw. 9 die Produkte des Schneidens und der Abnutzung der Schleifkörner aus.

Nachdem von der Flanke 8 des Zahnes 9 die für die Schlichtbearbeitung erforderliche Metallschicht abgenommen worden ist, erteilt man dem Zahnrad 2 den tangentialen Vorschub in der dem Pfeil B entgegengesetzten Richtung, dabei wird die Flanke 11 des Zahnes 12 des Zahnrades 2 in ähnlicher Weise von der Schleiffläche 10 des Zahnes 6 des Zahnkranzes 3 bearbeitet.

Mit dem Zahnkranz 3 kann man im Vergleich zum herkömmlichen Schleifwerkzeug eine viel grössere Anzahl der Zahnräder 2 bearbeiten, mit einem von denen der Zahnkranz 3 geformt war. Da im Eingriff der Zähne des Zahnkranzes 3 und des Zahnrades 2 der theoretisch richtige Eingriff vorliegt und diese beiden Elemente sich zwangläufig synchron mit einer vorgegebenen Übersetzung, die ihrem Zähnezahlverhältnis streng gleich ist, drehen, so wird die Metallabnahme von der Flanke 8 des Zahnes 9 des Zahnrades 2 und die Abnutzung des Zahnes 6 des Zahnkranzes 3 maximal gleichmässig sein. Bei unumgänglicher allmählicher Verzerrung der Flanken 7 und 10 des Zahnes 6 des Zahnkranzes 3 kann man ihn gleich abrichten, wofür unter axialem Vorschub in den Eingriff der Zähne des Zahnkranzes 3 und des Zahnrades 2 an Stelle des Schmier- und Kühlmittels das freie Schleifmittel gegeben wird, bis der theoretisch richtige Eingriff wiederhergestellt ist. Die Bearbeitung des Zahnrades 2 unter periodischem Abrichten des Zahnkranzes 3 mit demselben Zahnrad 2 kann man bis zur Anspitzung der Krone des Zahnes 6 des Zahnkranzes 3 durchführen. Die volle Höhe des Zahnes 6 wird wiederhergestellt, indem die flache Schleifscheibe 1 in Pfeilrichtung A (Fig. 2) axial vorgeschoben wird und in die Berührungszone der Zähne des Zahnkranzes 3 (Fig. 3) und des Zahnrades 2 das freie Schleifmittel gegeben wird. Also wird bei dem Abrichten des Zahnkranzes 3 (Fig. 7 und Fig. 8) nur durch Austausch des in die Berührungszone der Zähne des Kranzes 3 und des Zahnrades 2 zu gebenden freien Schleifmittels gegen das Schmier- und Kühlmittel die bearbeitende Fläche 7 des Zahnes 6 des Zahnkranzes 3 in die zu bearbeitende Fläche verwandelt. Diese Besonderheit des Verfahrens zur Herstellung eines verzahnten Schleifwerkzeuges und des Verfahrens zur Fertigbearbeitung mit diesem Schleifwerkzeug gemeinsam mit dem
Zähnezahlverhältnis zwischen dem Kranz 3 und dem Zahnrad 2, welches sich durch eine irrationale Zahl ausdrückt, gestattet es, verzahnte, sogenannte "Meisterräder" anzufertigen, die beispielsweise in der Gerätetechnik, im Präzisionsmaschinenbau sowie als Genauigkeitsnormal eingesetzt werden.

Die gleichzeitige Bearbeitung zweier Zahnräder 2 und
4 (Fig. 6), die ein zusammenpassendes Zahnradpaar bilden,
mit einem verzahnten Schleifwerkzeug mit zwei konzentrisch angeordneten Zahnkränzen 3 und 5 erfolgt ganz so
wie die Bearbeitung eines Zahnrades 2. Den tangentialen
Vorschub erteilt man dem zu bearbeitenden Zahnrad 2 oder
4, während man das Schmier- und Kühlmittel in die Berührungszonen der Zähne der Zahnkränze 3 und 5 und der Zahnräder 2 und 4 gibt.

Gewerbliche Verwertbarkeit

Das angemeldete Verfahren zur Herstellung
eines verzahnten Schleifwerkzeuges zur Bearbeitung von
Zahnrädern lässt sich auf einer verhältnismässig einfachen
Ausrüstung durchführen. Ein wichtiger Vorteil gegenüber
den bestehenden Verfahren ist, dass als Halbzeug für die
Herstellung des verzahnten Schleifwerkzeuges flache
Standardschleifscheiben eingesetzt werden. Mit diesem
Verfahren kann man ein Zahnwerkzeug formen, das wegen
der Längsform der Zähne, beispielsweise einer spiroiden,
eloiden und anderen Zahnform, nicht nach den bestehenden
Methoden hergestellt werden kann. Das nach dem erfindungsgemässen Verfahren hergestellte Zahnwerkzeug berücksichtigt die individuellen Besonderheiten der Zahngeometrie
einer konkreten Partie der mit diesem Werkzeug zu bearbeitenden Zahnräder.

Das erfindungsgemässe Verfahren ist sehr leistungsfähig. Die Gesamtzeit für die Herstellung eines verzahnten Schleifwerkzeuges aus einer flachen Schleifscheibe
beträgt ungefähr 25 bis 30 Min. im Vergleich zu 24 bis 36 Stunden für die Herstellung eines gleichartigen Werkzeuges mit herkömmlichen Verfahren. Die hohe Leistungsfähigkeit des Verfahrens vereinigt sich mit einem billigen Satz der bearbeitenden Zahnelemente, als welcher ein herkömmliches Zahnradpaar eingesetzt wird. Mehr noch, zum Schruppformen des verzahnten Schleifwerkzeuges taugen Zahnräder, die bezüglich mancher Kennwerte, beispielsweise eines Fehlers benachbarter Teilungen, nicht konditionsgerecht sind.

Das angemeldete Verfahren zur Fertigbearbeitung mit einem nach dem erfindungsgemässen Verfahren hergestellten verzahnten Schleifwerkzeug ermöglicht unter periodischem Abrichten des Werkzeuges mit dem zu bearbeitenden Zahnrad die Anferigung von "Meisterrädern", deren Herstellung nach den bestehenden Verfahren zur Fertigbearbeitung von Zahnrädern ausserordentlich erschwert ist.

Die Leistungsfähigkeit des erfindungsgemässen Verfahrens zur Fertigbearbeitung von Zahnrädern ist um ein vielfaches höher als die der bestehenden Verfahren.

PATENTANSPRÜCHE

1. Verfahren zur Herstellung eines verzahnten Schleifwerkzeuges, bestehend darin, dass man das bearbeitende Zahnrad mittels eines axialen Vorschubs (A) mit dem Halbzeug für das verzahnte Schleifwerkzeug in Berührung bringt und sie dann unter gleichzeitiger Zuführung eines freien Schleifmittels in ihre Berührungszone zwangsweise dreht, dadurch g e k e n n z e i c h n e t , dass man als Halbzeug für das verzahnte Schleifwerkzeug eine flache Schleifscheibe (1) benutzt, in bezug auf welche man das bearbeitende Zahnrad (2) derart anordnet, dass seine Achse und die Achse der flachen Schleifscheibe (1) sich kreuzende Gerade darstellen, wobei die flache Schleifscheibe (1) und das Zahnrad (2) ein Hypoidpaar bilden.

2. Verfahren nach Anspruch 1, dadurch g e k e n n z e i c h n e t , dass das Zähnezahlverhältnis zwischen dem Zahnkranz (3) des verzahnten Schleifwerkzeuges und dem bearbeitenden Zahnrad (2) eine irrationale Zahl ist.

3. Verfahren nach Anspruch 1, dadurch g e k e n n z e i c h n e t , dass man ein zusätzliches, mit dem ersten Zahnrad (2) gepaartes Zahnrad (2) in bezug auf die flache Schleifscheibe (1) hypoid und auf der anderen Seite von der Diametralebene (0'-0') dieser Schleifscheibe (1) anbringt, welches auf dieser einen zusätzlichen, in bezug auf den ersten Zahnkranz (3) konzentrischen Zahnkranz (5) formt.

4. Verfahren zur Fertigbearbeitung eines Zahnrades mit dem gemäss dem Verfahren nach Anspruch 1 hergestellten verzahnten Schleifwerkzeug, dadurch g e k e n n z e i c h n e t , dass man nach Abschluss der Formung mindestens eines Zahnkranzes (3) auf der flachen Schleifscheibe (1) die Zuführung des freien Schleifmittels zur Berührungszone des bearbeitenden Zahnrades (2) und des verzahnten Schleifwerkzeuges sowie den axialen Vorschub (A) der flachen Schleifscheibe (1) einstellt, dann mindestens einem Zahnrad (2) einen tangentialen Vorschub (B) erteilt und gleichzeitig in die Berührungszone ein Schmier- und Kühlmittel bis zur vollständigen Beendigung der Fertigbearbeitung des Zahnrades (2) gibt.

FIG.1

FIG. 2

FIG. 3

FIG.4

FIG. 5

FIG. 6

FIG.7

FIG.8

# INTERNATIONAL SEARCH REPORT

International Application No PCT/SU 88/00194

## I. CLASSIFICATION OF SUBJECT MATTER (if several classification symbols apply, indicate all) 6

According to International Patent Classification (IPC) or to both National Classification and IPC

IPC⁴    B 23 F 19/00, B 24 B 53/06

## II. FIELDS SEARCHED

| Minimum Documentation Searched 7 | |
|---|---|
| Classification System | Classification Symbols |
| IPC⁴ | B 23 F 19/00, B 24 B 53/06 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | US, A 2996847, (Illinois Tool Works), 22 August 1961 (22.08.81) see figure 1 the claims | 1-4 |
| A | DE, A1, 3616175, (Reishauer AG) 8 January 1987 (08.01.87) | 1-4 |
| A | Tekhnologia i Kachestvo zubehatykh i chervyachnykh peredach, trudy Vsesojuznogo Soveschania "Tekhnologia i kachestvo zubchatykh i chervyachnykh peredach", chapt III, December 1971, (Erevan), see page 317 | 1-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 February 1989 (21.02.89) | 1 March 1989 (01.03.89) |
| International Searching Authority | Signature of Authorized Officer |
| ISA/SU | |

Form PCT/ISA/210 (second sheet) (January 1985)